# EUROPEAN PATENT APPLICATION

(11) **EP 1 895 731 A1**
(43) Date of publication of application: **05.03.2008**
(21) Application number: 06017901.7
(22) Date of filing: 28.08.2006
(51) Int. Cl.: H04L 27/26

(54) **Method for generating an SC-FDMA radio signal for transmission, method for receiving the signal as well as corresponding transmitter and receiver**

(71) Applicant: Nokia Siemens Networks GmbH & Co. KG, 81541 München (DE)
(72) Inventor: Eichinger, Josef Martin, 85464 Neufinsing (DE); Haustein, Dr. Thomas, 81735 München (DE); Rüdiger, Halfmann, 67697 Otterberg (DE)

(57) **Abstract**

According to a method for generating a single carrier FDMA radio signal (S') for transmission by a sending radio station of a radio communication system, where in for transmission of the radio signal (S') a transmission band with a transmission bandwidth TB is used. The transmission band consists of N sub carriers on which data symbols can be mapped. A mapping unit (11') maps data symbols on sub carriers in a baseband. An IFFT (12') with K points is applied to the sub carriers and the resulting signal is converted from digital to analogue (14') and further up-converted into the radio signal (S') in the transmission band using a local oscillator (LO') with a frequency f_{LO}, the number of points K used by the IFFT (12') is greater or equal to two times the number of sub carriers N on which data symbols can be mapped, K >= 2*N, and all frequencies of sub carriers on which the mapping unit (11') maps the data symbols are either smaller or all frequencies are greater than the frequency of the DC sub carrier (DCS').

## Description

The invention concerns a method for generating a radio signal for transmission by a sending radio station of a radio communication system and method for processing a radio signal received at a receiving radio station of a radio communication system as well as a respective transmitter and a respective receiver.

The basic uplink transmission scheme for the 3rd Generation Partnership Project (3GPP) Long Term Evolution (LTE) of UMTS is SC-FDMA (Single-Carrier - Frequency Division Multiple Access) with cyclic prefix (CP) to achieve uplink inter-user orthogonality and to enable efficient frequency-domain equalization at the receiver side.

Sub carrier mapping determines which part of the spectrum is used for transmission of information by mapping symbols carrying data to sub carriers. Symbols carrying data are called data symbols.

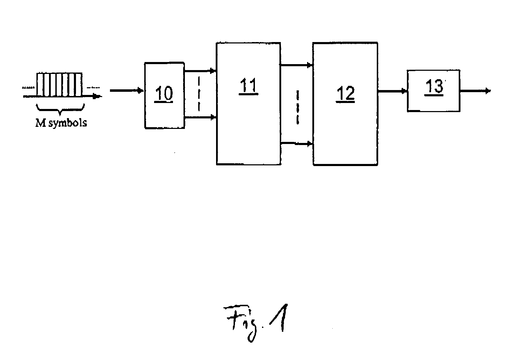

Figure 1 shows a part of a transmitter for SC-FDMA for a sending radio station. N data symbols are DFT pre-coded (DFT: Discrete Fourier Transformation) in box 10 and mapped in box 11 in the frequency domain on sub carriers. The sub carriers to be transmitted are provided to an IFFT (Inverse Fast Fourier Transformation) in box 12 to generate a signal in the time domain and finally a CP is inserted in box 13. Further processing after CP insertion is well known to a skilled person and therefore not shown in this figure.

For the case of localized FDMA, which offers the opportunity of channel adaptive resource allocation, all DFT pre-coded data symbols have to be mapped to consecutive sub carriers (localized mapping) otherwise the gain in PAPR (Peak-to-Average Power Ratio) will be reduced.

In LTE standardization various transmission bandwidths are under discussion (e.g. 1.25, 2.5, 5.0 MHz). Those transmission bands are divided in basic resource block units (RB), which are also known as chunks, in order to reduce the signaling for the FDMA scheduling.
For the exemplary case of a transmission band of 1.25 MHz bandwidth 3 RBs each with 25 sub carriers are suggested. Using an IFFT, e.g. of a size of 128 points, for the baseband processing and after up-conversion of the signal, the DC sub carrier is inside one of the resource blocks. Using the respective RB with localized mapping results in either a loss of data, if data symbols are mapped on the DC sub carrier, or in an increase in PAPR, if no data symbols are mapped on the DC sub carrier, i.e. if the data symbols to be transmitted are mapped to sub carriers on the left and/or the right side of the DC sub carrier. In the latter case, the respective RB has one more sub carrier than the other RBs.

Some companies propose to map data symbols on the DC sub carrier. In principle this is possible, but it requires phase locked oscillators for the down-conversion at a receiving end to avoid loss of data. The use of phase locked oscillators would be extremely complex and therefore expensive for a multi-user FDMA receiver. Without phase locked oscillators only a real valued signal can be mapped onto the DC sub carrier. For direct up-conversion this results in undesired amplitude offset of the time signal after the IFFT, because this reduces the dynamics at the digital to analog converter (DAC). Usually, capacitive coupling (C-coupling) is used in order to produce a signal without offset and data symbols modulated on the DC sub carrier will be lost therefore.

Others propose to leave the DC sub carrier blank when mapping data symbols to sub carriers. This would result either in suffering from an increase in PAPR, if a RB includes the DC sub carrier, or in putting a constraint on the scheduling options, which would degrade the throughput performance significantly especially at small transmission bandwidths like 1.25 MHz or 2.5 MHz, which are of great interest e.g. with respect to GSM re-farming, i.e. the re-use of the GSM spectrum for OFDM transmission techniques as proposed by LTE.

An object of the present invention is to provide an improved method for generating a radio signal for transmission by a sending radio station of a radio communication system, the inventive method enabling usage of all sub carriers of a transmission band for mapping of data symbols without loss of data or increasing PAPR as described above in connection with data symbols mapped to the DC sub carrier. It is a further object of the invention to provide a method for processing a respective radio signal received at a receiving radio station of a radio communication system as well as a respective transmitter and a respective receiver.

The object is achieved by a method for generating a radio signal for transmission by a sending radio station of a radio communication system, a transmitter, method for processing a radio signal received at a receiving radio station of a radio communication system and a receiver according to independent claims.

Advantageous embodiments are subject matter of dependent claims.

According to the inventive method for generating a radio signal for transmission by a sending radio station of a radio communication system, whereas for transmission of the radio signal a transmission band with a transmission bandwidth TB is used, whereas the transmission band consists of N sub carriers on which data symbols can be mapped, whereas a mapping unit maps data symbols on sub carriers in a baseband, and whereas after mapping of the data symbols an IFFT with K points is applied to the sub carriers and the resulting signal is converted from digital to analogue and further up-converted into the radio signal in the transmission band using a local oscillator with a frequency f_{LO}, the number of points K used by the IFFT is greater or equal to two times the number of sub carriers N on which data symbols can be mapped, K >= 2*N, and all frequencies of sub carriers on which the mapping unit maps the data symbols are either smaller or all frequencies are greater than the frequency of the DC sub carrier.

Advantageously the frequency f_{LO} of the local oscillator is chosen such that the transmission band is centred around a frequency f_{center} which is predefined fox a transmission band of the radio communication system.

Advantageously after up-conversion frequencies smaller or greater than the transmission band are suppressed by applying a RF filter mask (RFM).

According to the inventive method for processing a radio signal received at a receiving radio station of a radio communication system, whereas for transmission of the radio signal a transmission band with a transmission bandwidth TB is used, whereas the transmission band consists of N sub carriers on which data symbols can be mapped, whereas the radio signal is down-converted using a local oscillator with a frequency f_{LO} and further converted from analogue to digital, whereas a FFT with K points is applied to the resulting signal and after the FFT a de-mapping unit de-maps data symbols from sub carriers of the baseband, the frequency f_{LO} of the local oscillator has no overlap with any sub carrier of the transmission band, the number of points K used by the FFT is greater or equal to two times the number of sub carriers N on which data symbols can be mapped, K >= 2*N, and all frequencies of sub carriers of which the de-mapping unit de-maps the data symbols are either smaller or all frequencies are greater than the frequency of the DC sub carrier.

The inventive transmitter shows all features that are necessary for performing the inventive method for generating a radio signal. Particularly the transmitter can show respective means for performing the specific steps of the inventive method or the specific method options.

The inventive receiver shows all features that are necessary for processing a radio signal transmitted according to the inventive method. Particularly the receiver can show respective means for reversely performing the specific steps of the inventive method or the specific method options.

The invention particularly has the following advantages:
- Mapping to a central RB, which includes the DC sub carrier according to the state of the art, can be realized without an increase of the PAPR due to blanking of the DC-subcarrier or bit error rate (BER) degradation due to mapping of data symbols onto the DC sub carrier, because according to the invention the DC sub carrier is shifted outside the transmission band. This is especially important in the transmission modes with limited transmission bandwidth e.g. 1.25 MHz.
- The scheduler has more degrees of freedom for mapping of data symbols to resource blocks when the RB which - according to the state of the art - included the DC sub carrier can be treated like any other, because by using the invention no sub carrier of the transmission band coincides with the DC sub carrier.
- This also allows mapping of DFT pre-coded data blocks over the middle of the transmission band without degradation in single-carrier properties of the transmitted signal.
- The whole mapping is done in the digital base band domain and the resulting frequency shift is compensated by an appropriate shift of the local oscillator used for up-conversion.
- The proposed scheme is also suitable with standard IF-up and down-conversion techniques.
- This technique can be applied for the OFDM uplink and also for the downlink proposed for 3GPP LTE, even if PAPR reduction with DFT pre-coding is not an issue for the downlink.
- Image carrier leakage caused by FFT and IFFT processing in baseband can be avoided since the image band is not used. This is of importance for all OFDM based transmission systems because it allows the use of low-cost of the shelf RF equipment at the transmitter and the receiver, while using the same band-pass filters in the RF. (The image carrier leakage mainly comes from I/Q imbalances in the up- and down-conversion and puts quite stringent requirements on the RF for higher order modulation like 64-QAM.)

In the following the invention is described according to embodiments shown in figures:
- Fig. 1: drawing schematically showing a part of a transmitter usable for SC-FDMA,
- Fig. 2: drawing showing schematically a transmitter, mapping of data symbols to sub carriers in a baseband and a spectrum used for data transmission according to the state of the art,
- Fig. 3: drawing showing schematically a transmitter, mapping of data symbols to sub carriers in a baseband and a spectrum used for data transmission according to the invention.

A sending radio station is for example a terminal or a base station of a radio communication system.

A receiving radio station is for example a terminal or a base station of a radio communication system.

A base station is network-side equipment which receives user and/or signaling data from a terminal and/or transmits user and/or signaling data to the terminal, over an air interface.

A base station is linked via further network-side equipment into a core network, via which connections are effected to other radio communication systems or into other data networks. The term data network refers, for example, to the Internet or a fixed network with, for example, circuit-switched or packet-switched connections, for example for voice and/or data.

A terminal is for instance a mobile radio terminal, particularly a mobile phone or a flexible of fixed device, for transmission of picture data and/or sound data, for fax, short message service (SMS) messages and/or E-mail messages, and/or for internet access.

The invention can advantageously be used in any kind of radio communication system.

Radio communication systems are systems in which a data transmission between terminals is performed over an air interface. The data transmission can be both bidirectional and unidirectional. Radio communication systems are particularly cellular radio communication systems, e.g. according to the GSM (Global System for Mobile Communications) standard or the UMTS (Universal Mobile Telecommunication System) standard. Also future mobile radio communication systems, e.g. according to 3GPP LTE or according to the fourth generation, as well as ad-hoc-networks shall be understood as radio communication systems. Radio communication systems are also wireless local area networks (WLAN) according to standards from the Institute of Electrical and Electronics Engineers (IEEE) like 802.11a-i, HiperLAN1 and HiperLAN2 (High Performance Radio Local Area Network) as well as Bluetooth-Networks.

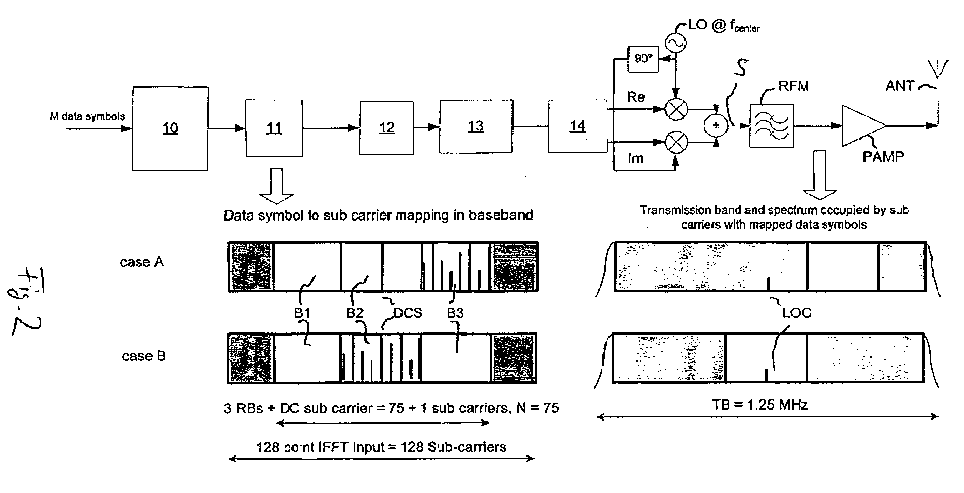

According to the state of the art, figure 2 shows boxes 10, 11, 12, 13 used for standard OFDM baseband processing in a transmitter of a sending radio station as already shown in Figure 1, followed by a D/A (Digital to Analogue) conversion in box 14 and direct up-conversion using a local oscillator LO at center frequency f_{center}. After up-conversion the resulting signal is filtered using a RF filter mask RFM, amplified by a power amplifier PAMP and transmitted via antenna ANT.

By way of example the transmission bandwidth is chosen to be TB= 1.25 MHz and three resource blocks (RB) B1, B2 and B3 each having 25 sub carriers on which data symbols can be mapped are used. The center resource block B2 additionally includes the DC sub carrier DCS, on which in this example no data symbols are mapped. The IFFT uses 128 points and a basic clock rate CLR is used for the D/A conversion.

The left plots of cases A and B show mapping of data symbols to sub carriers of resource blocks before IFFT. Only sub carriers of resource blocks B2, B3 with mapped data symbols are shown and only 8 out of 25 sub carriers of these resource blocks B2, B3 are shown for clarity reasons. The right plots show the respective frequency spectrum transmitted from the antenna ANT. In the spectrum we see the position of the local oscillator LO indicated with a short line LOC. Case A: mapping of data symbols on sub carriers of resource block B3. Case B: mapping of data symbols on sub carriers of resource block B2. Case B requires more bandwidth (one additional subcarrier) since the DC sub carrier DCS is left blank.

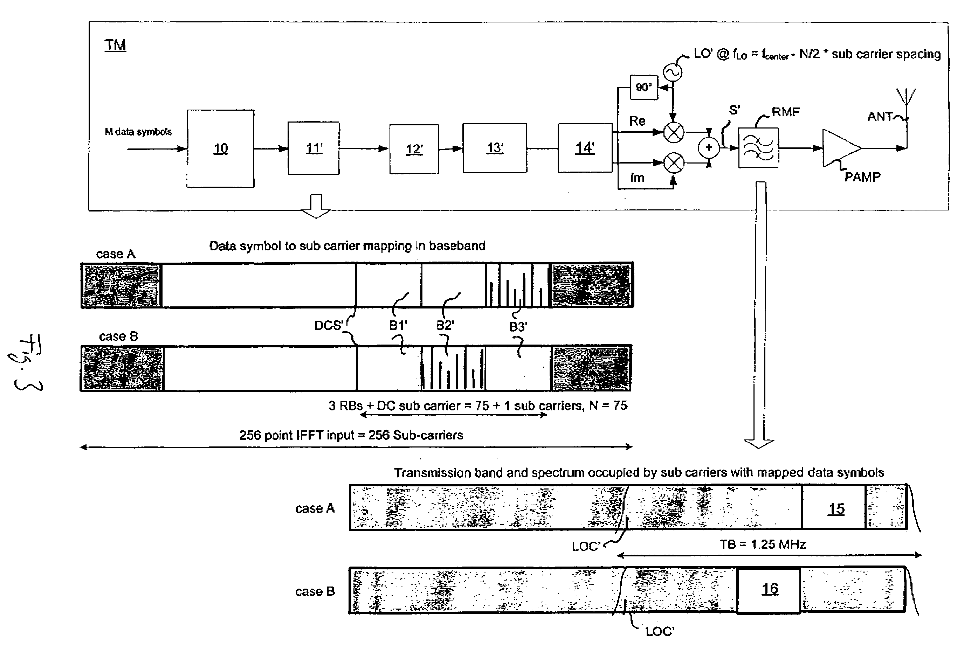

Figure 3 shows the principle of the invention by use of a transmitter TM which is used by a sending radio station and has been modified according to the invention to generate and transmit a radio signal in the transmission system shown in Figure 2.

An inventive transmitter uses an IFFT with at least twice the number of points than sub carriers on which data symbols can be mapped, i.e. in this example the IFFT has to have at least 2*3*25=150 points. An IFFT used by the transmitter TM of figure 3 in box 12' has 256 points, i.e 2*128 points. If all frequencies would be used in front of IFFT this would result in a spectrum of 2.5 MHz, i.e. twice the bandwidth as shown in Figure 2. All data symbols are mapped in box 11' on sub carriers of resource blocks B1', B2' and B3' on the right hand side of the DC sub carrier DSC', i.e these sub carriers have frequencies greater than the frequency of the DC sub carrier DCS'. Therefore no resource block includes the DC sub carrier DGS'. Alternatively all data symbols can be mapped on sub carriers of resource blocks on the left hand side of the DC sub carrier DCS'.

For D/A conversion in box 14' a clock rate of twice the basic clock rate CLR is used. Because of doubling of the clock rate the length of a CP inserted in box 13' is also doubled in terms of the number of clock samples in order to keep the CP constant in time (µs).

After up-conversion the part of the spectrum carrying a modulated signal, i.e. relating to the sub carriers on which data symbols have been mapped, is only in the upper or alternatively in the lower sideband in respect of the DC sub carrier DCS and occupies e.g. up to 75 adjacent sub carriers.

To center the resource blocks B1', B2' and B3' around the same frequency f_{center} as used in the example of figure 2, the frequency f_{LO} of a local oscillator LO' used for up-conversion in figure 3 has to be smaller than f_{center} by (75/2) multiplied with the sub carrier spacing. The spectrum after up-conversion has a bandwidth of 2.5 MHz and is reduced to the desired spectrum by the RF filter mask RFM. In practice only the sub carriers carrying data are non zero before the IFFT and all others are set to zero.

In the spectrum the position of the local oscillator LO' is indicated with a short line LOC'. The DC sub carrier DCS' is inside the allowed transmission band but outside the resource blocks B2', B2' and B3'. Its amplitude can be reduced by well known suppression techniques and is further suppressed by the RF filter mask RFM. By this technique out-of-band radiation is negligible. The spectrum occupied by data is marked by boxes 15 and 16 and is always beside the DC sub carrier and can therefore occupy all consecutive sub carriers within the entire bandwidth used for resource allocation.

An inventive receiver for a receiving radio station has to fulfill the following conditions:
Basically all steps described above in connection with the inventive transmitter have to be performed backwards
   a.) Standard filtering (using an RF filter mask) is applied at the receiver before down-conversion into the baseband or IF.
   b.) Down-conversion by mixing with a local oscillator frequency shifted either by the same amount as the transmitter or such that the local oscillator frequency is at least outside the frequency band of interest for detection (like single side band down conversion), i.e. the frequency of the local oscillator is either smaller than the frequency of the sub carrier with the smallest frequency or greater than the frequency of the sub carrier with the highest frequency, preferably the frequency of the local oscillator lies outside the transmission bandwidth allowed for the received radio signal.
   c.) The baseband signal occupies one single side band of the bandwidth associated with the FFT size, i.e. 256 in this example.
   d.) Apply the 256-point FFT to reconstruct the frequency domain data.
   e.) De-map all 75 sub carriers carrying the data symbols from one side band, i.e. all sub carriers have frequencies either smaller or greater than the DC sub carrier.

The invention is applicable for uplink as well as downlink transmissions, i.e. for transmissions from a user terminal to a base station as well as for transmission from a base station to a user terminal.

Further the invention is certainly also applicable without a DFT, e.g. using OFDMA with one single data symbol being mapped on a single sub carrier (instead of spreading all data symbols to be transmitted over several sub carriers in case of using a DFT).

The invention can certainly be used with a transmission bandwidth smaller or greater than 1.25 MHz and with a maximum number N of sub carriers on which data symbols can be mapped smaller or greater than 75.

## Claims

1. Method for generating a radio signal (S') for transmission by a sending radio station of a radio communication system, whereas for transmission of the radio signal (S') a transmission band with a transmission bandwidth TB is used, whereas the transmission band consists of N sub carriers on which data symbols can be mapped, whereas a mapping unit (11') maps data symbols on sub carriers in a baseband, and whereas after mapping of the data symbols an IFFT (12') with K points is applied to the sub carriers and the resulting signal is converted from digital to analogue (14') and further up-converted into the radio signal (S') in the transmission band using a local oscillator (LO') with a frequency f_{LO},
**characterised in that**,
the number of points K used by the IFFT (12') is greater or equal to two times the number of sub carriers N on which data symbols can be mapped, K >= 2*N, and all frequencies of sub carriers on which the mapping unit (11') maps the data symbols are either smaller or all frequencies are greater than the frequency of the DC sub carrier (DCS').

2. The method according to claim 1, whereas the frequency f_{LO} of the local oscillator (LO') is chosen such that the transmission band is centred around a frequency f_{center} which is predefined for a transmission band of the radio communication system.

3. The method according to claim 1 or 2, whereas after up-conversion frequencies smaller or greater than the transmission band are suppressed by applying a RF filter mask (RFM).

4. Method for processing a radio signal (S') received at a receiving radio station of a radio communication system, whereas for transmission of the radio signal (S') a transmission band with a transmission bandwidth TB is used, whereas the transmission band consists of N sub carriers on which data symbols can be mapped, whereas the radio signal (S') is down-converted using a local oscillator (LO') with a frequency f_{LO} and further converted from analogue to digital, whereas a FFT with K points is applied to the resulting signal and after the FFT a de-mapping unit de-maps data symbols from sub carriers of the base-band,
**characterised in that**,
- the frequency f_{LO} of the local oscillator has no overlap with any sub carrier of the transmission band,
- the number of points K used by the FFT is greater or equal to two times the number of sub carriers N on which data symbols can be mapped, K >= 2*N,
- and all frequencies of sub carriers of which the de-mapping unit de-maps the data symbols are either smaller or all frequencies are greater than the frequency of the DC sub carrier (DCS').

5. Transmitter for a sending radio station of a radio communication system, comprising means for performing the method for generating a radio signal according to one of the claims 1, 2 or 3.

6. Receiver for a receiving radio station of a radio communication system, comprising means for performing the method for processing a radio signal according to claim 4.
